# EUROPÄISCHE PATENTSCHRIFT

(11) **EP 1 000 840 B1**
(45) Veröffentlichungstag und Bekanntmachung des Hinweises auf die Patenterteilung: **25.08.2004**
(21) Anmeldenummer: 99120813.3
(22) Anmeldetag: 21.10.1999
(51) Int. Cl.: B62D 25/08, B62D 21/15, B60R 19/02

(54) **Tragstruktur eines Vorderwagens eines Kraftfahrzeugs**
Supporting structure for the front body for an automotiove vehicle
Structure de suppport de la partie avant pour un véhicule automobile

(30) Priorität: 09.11.1998 DE 19851495
(43) Veröffentlichungstag der Anmeldung: 17.05.2000
(73) Patentinhaber: Volkswagen Aktiengesellschaft, 38436 Wolfsburg (DE)
(72) Erfinder: Graubner, Ralf, 09474 Walthersdorf (DE); Sinnhuber, Ruprecht, Dipl.-Ing., 38518 Gifhorn (DE); Schmücker, Martin, 38110 Braunschweig (DE)

(56) Entgegenhaltungen:
- WO-A-98/41423
- DE-A- 4 417 380
- DE-A- 19 715 874

## Beschreibung

Die Erfindung betrifft eine Tragstruktur eines Vorderwagens eines Kraftfahrzeugs nach dem Oberbegriff des Anspruchs 1.

Allgemein bekannte Tragstrukturen für den Vorderwagen eines Kraftfahrzeugs umfassen Längsträger und Querträger, die einerseits die erforderliche Stabilität und Verwindungssteifigkeit sicherstellen und andererseits bei einem Fahrzeugaufprall durch Deformationen Aufprallenergie aufnehmen können. Bei üblichen bekannten Tragstrukturen wird ein Stoßfängerquerträger verwendet, der jeweils im Seitenbereich mit vorderen Enden von Längsträgem verbunden ist. Zudem enthält eine solche Tragstruktur je eine seitliche Kotflügelbank als Ober-Längsträger, an die je nach unten ein Radhaus anschließt. Die Längsträger und Ober-Längsträger sind zur Aufnahme von Aufprallenergie gezielt in ihrer Länge verkürzbar und deformierbar.

Die Tragstruktur eines solchen Vorderwagens ist hinsichtlich der Deformation im wesentlichen für einen Insassenschutz ausgelegt und insbesondere für eine Fußgänger/Fahrzeugkollision im Sinne eines Fußgängeraufprallschutzes sehr steif. Zudem sind bei einer solchen Anordnung die Steifigkeiten an der Frontwand sehr unterschiedlich verteilt, so daß sich Kompatibilitätsprobleme bei Kollisionen mit anderen Fahrzeugen ergeben können, bei denen die Steifigkeiten und Deformationselemente lokal anders, beispielsweise in anderen Höhen angeordnet sind.

Weiter ist eine Tragstruktur eines Vorderwagens bekannt WO-A-9 502 525, bei der zwischen dem Stoßfänger und den anschließenden Längsträgern Deformationselemente angeordnet sind, die bei relativ geringer Aufprallenergie verformen, noch bevor eine Verformung des anschließenden Trägerverbunds erfolgt. Solche Deformationselemente sind einfach austauschbar gestaltet.

Aufgabe der Erfindung ist es, eine gattungsgemäße Tragstruktur eines Vorderwagens eines Kraftfahrzeugs so weiterzubilden, daß ein verbesserter Fußgängerschutz und eine verbesserte Kompatibilität erreichbar sind und zudem das Deformationsverhalten des Gesamtvorderwagens im Sinne einer Vergleichmäßigung positiv beeinflußbar ist. Diese Aufgabe wird mit den Merkmalen des Anspruchs 1 gelöst.

Gemäß Anspruch 1 ist ein Unter-Stoßfängerquerträger vorgesehen, der unter dem üblichen Stoßfängerquerträger verläuft. Der Unter-Stoßfängerquerträger ist jeweils in seinen Seitenbereichen mit den vorderen Enden von Unter-Längsträgern verbunden. Die Unter-Längsträger sind jeweils mit einem benachbarten Längsträger an einem Anbindungspunkt verbunden, der in einem relativ großen Abstand zum Unter-Stoßfängerquerträger nach rückwärts versetzt liegt, so daß das Verformungsverhalten des Längsträgers durch den Unter-Längsträger nicht beeinträchtigt wird.

Erfindungsgemäß können damit zwei weitgehend getrennt funktionsfähige Stoßfängersysteme mit dem üblichen Stoßfängerquerträger und dem separaten Unter-Stoßfängerquerträger realisiert werden. Damit wird eine großflächigere Aufprallwand am Frontende geschaffen, die zur Entlastung der Frontstruktur beiträgt. Insbesondere werden bei einer Frontkollision zwei Lastpfade in die Fahrzeugstruktur geschaffen, über die sich die Aufpralllast verteilen kann.

Vorteilhaft können auch beide Stoßfängersysteme hinsichtlich ihrer Steifigkeit und ihres Deformationsverhaltens weitgehend unabhängig voneinander unterschiedlich dimensioniert werden. Dabei kann vorzugsweise das Stoßfängersystem mit dem Unter-Stoßfängerquerträger auf eine Kollision mit einem Fußgänger abgestimmt sein.

Positiv wird auch durch die großflächigere Aufprallwand die Kompatibilität für eine Fahrzeug/Fahrzeug-Kollision bei einem Front-, Seiten- und Heckaufprall beeinflußt.

Besonders vorteilhaft wird der Anbindungspunkt eines Unter-Längsträgers am üblichen Längsträger so weit nach rückwärts versetzt bis in den Bereich eines Hilfsrahmen-Anbindungspunkts und/oder in den Übergangsbereich zu einem Schweller. Damit wird das übliche Verhalten des darüberliegenden normalen Längsträgers nur unbedeutend beeinflußt, so daß beide übereinanderliegenden Stoßfängersysteme weitgehend unabhängig voneinander wirken und entsprechend unabhängig dimensionierbar sind.

Für ein gutes Deformationsverhalten und einen übersichtlichen, platzsparenden Aufbau wird vorgeschlagen, daß je ein Unter-Längsträger und ein zugeordneter, darüberliegender Längsträger in einer Vertikallängsebene liegen.

Zur Stabilitätsverbesserung und zur Beherrschung eines Schwingungsverhaltens wird zudem vorgeschlagen, daß der Stoßfängerquerträger mit dem Unter-Stoßfängerquerträger über Verbindungslaschen verbunden ist. Diese Verbindungslaschen sind je nach den Gegebenheiten so dimensionierbar, daß sie bei einer Kollision ohne großen Widerstand nachgeben.

Eine zweckmäßige Aufprallgeometrie ergibt sich, wenn der Unter-Stoßfängerquerträger gegenüber dem Stoßfängerquerträger z. B. unter Berücksichtigung der Schadensklassenminimierung zurückversetzt angeordnet ist.

In einer besonders vorteilhaften Weiterbildung ist zudem ein Ober-Stoßfängerquerträger vorgesehen, der über dem herkömmlichen Stoßfängerquerträger verläuft und der jeweils in einem Seitenbereich mit dem vorderen Ende eines Ober-Längsträgers, beispielsweise einer Kotflügelbank verbunden ist. Mit dieser Maßnahme wird vorteilhaft die Fläche einer aufprallenden und für eine Krafteinleitung und eine Energieabsorption zur Verfügung stehende Frontfläche weiter vergrößert, so daß damit eine weitere Entlastung der Frontstruktur erreichbar ist. Insbesondere werden für eine Aufpralllast damit drei Lastpfade in Fahrzeuglängsrichtung zur Verfügung gestellt, über die sich die Belastungen vorteilhaft verteilen können. Damit ist insbesondere auch die Kompatibilität bei Kollisionen unterschiedlicher Fahrzeuge bezüglich Front/Front, Front/Seite und Front/Heck verbessert.

Zweckmäßig liegen dabei der Ober-Stoßfängerquerträger und der Unter-Stoßfängerquerträger in einer Vertikal-Querebene. Eine besonders vorteilhafte und hinsichtlich der Steifigkeit und des Deformationsverhaltens gut beherrschbare und dimensionierbare Anordnung ergibt sich in Form eines geschlossenen Frontschildrahmens als Frontend-Rahmen, bei dem der Ober-Stoßfängerquerträger und der Unter-Stoßfängerquerträger mit jeweils seitlichen Rahmenstützen zu einem vorzugsweise etwa rechtwinkligen Rahmen geschlossen sind. Ein solcher Frontschildrahmen mit den vorstehend aufgezeigten mehreren Belastungsebenen ist zur Einleitung von Aufprallbelastungen in die Vorderwagenstruktur sowie hinsichtlich einer Fahrzeugkompatibilität besonders geeignet.

Zusätzlich zu der bereits angegebenen Möglichkeit, die Belastungsaufnahmen und .Zusätzlich zu der bereits angegebenen Möglichkeit, die Belastungsaufnahmen und Deformationen in den unterschiedlichen Ebenen unterschiedlich z. B. hinsichtlich eines verbesserten Fußgängeraufprallschutzes zu dimensionieren, können die zusätzlichen Trägerelemente vorteilhaft zur Halterung von Funktionsteilen herangezogen werden.

Beispielsweise sind zur Aufnahme von Scheinwerfern und für eine zusätzliche Aussteifung der Frontwand Schweinwerfer-Brillenrahmen möglich, die am Ober-Stoßfängerquerträger und/oder an den seitlichen Rahmenstützen angeschlossen sind und in denen jeweils ein Scheinwerfer aufgenommen ist. Weiter können ein Kühler und/oder ein Hakenschloß für eine Fronthaube und/oder ein Gebläse befestigt werden. Zudem kann vorteilhaft ein flächiges Deformationselement in der Art einer sog. Soft-Nose" als Fußgängeraufprallschutz angebracht werden.

Anhand einer Zeichnung wird die Erfindung näher erläutert.

Es zeigen:
- Fig. 1: eine perspektivische Ansicht einer Tragstruktur eines Personenkraftwagens mit einem Vorderwagen mit einem Frontschildrahmen, und
- Fig. 2: eine perspektivische Ansicht eines Teils der Tragstruktur eines Vorderwagens in einer alternativen Ausführungsform.

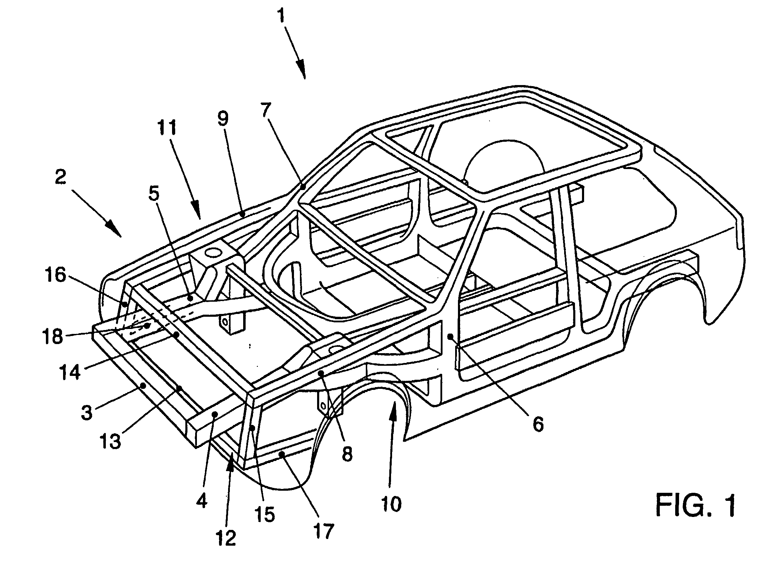

In Fig. 1 ist eine Tragstruktur 1 eines Personenkraftwagens dargestellt mit einer Struktur eines Vorderwagens 2 die einen Stoßfängerquerträger 3 aufweist, der jeweils an seinen Endseiten mit den vorderen Enden von Längsträgers 4, 5 verbunden ist. Ausgehend von den A-Säulen 6, 7 und nach vorne gerichtet verläuft jeweils eine Kotflügelbank als Ober-Längsträger 8, 9. Daran schließt sich jeweils nach unten ein Radhaus 10, 11 an.

Zusätzlich zu einem solchen herkömmlichen Aufbau ist ein Frontschildrahmen 12 mit großer flächiger Ausdehnung in einer Vertikal-Querebene verwendet, der aus einem Unter-Stoßfängerquerträger 13 unterhalb des Stoßfängers 3, einem Ober-Stoßfängerquerträger 14 oberhalb des Stoßfängers 3 und seitlichen, vertikalen Rahmenstützen 15, 16 besteht. Die oberen, seitlichen Ecken des Frontschildrahmens 12 sind mit den vorderen Enden der Oberlängsträger 8, 9 verbunden und mit gegen nach rückwärts gerichtete Belastungen abgestützt.

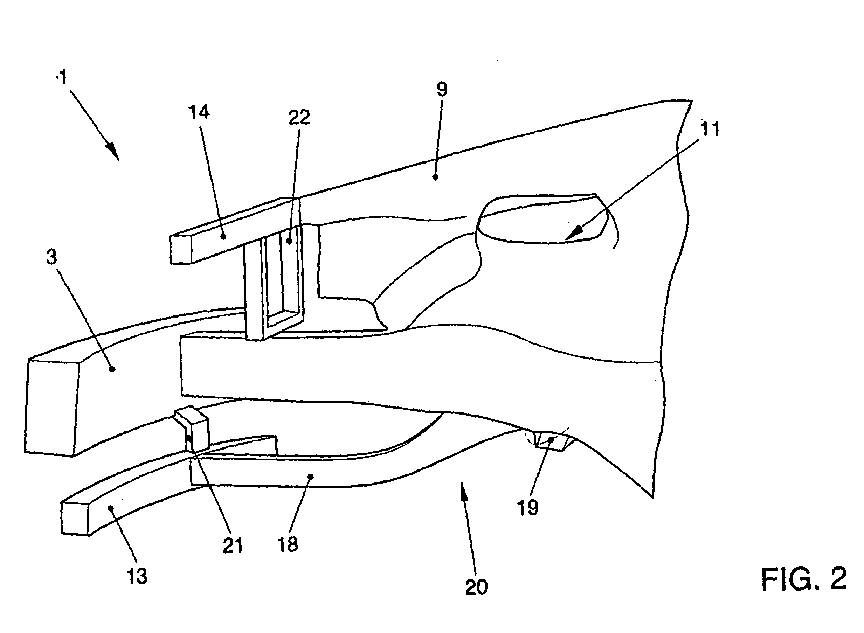

Die unteren, seitlichen Eckbereiche des Unter-Stoßfängerquerträgers sind über Unter-Längsträger 17, 18 in einem Abstand zum Unter-Stoßfängerquerträger an Anbindungspunkten mit der Vorderwagentragstruktur, vorzugsweise mit einem benachbarten Längsträger und/oder einem anschließenden Schweller verbunden. In Fig. 1 ist lediglich schematisch die nach rückwärts gerichtete Abstützung des Frontschildrahmens 12 über die Unter-Längsträger 17, 18 dargestellt, während in Fig. 2 eine konkrete Ausführung einer solchen Anbindung gezeigt ist.

In Fig. 2 ist ein Teilausschnitt eines rechten, vorderen Bereichs der Tragstruktur 1 des Vorderwagens in einer etwas modifizierten Ausführung gezeigt, wobei die Blickrichtung vom Motorraum aus seitlich nach vorne verläuft.

Auch hier ist der übliche Stoßfängerquerträger 3 zu sehen, der mit dem Längsträger 5 verbunden ist, welcher im rückwärtigen Bereich einen Hilfsrahmen-Anbindungspunkt 19 aufweist. Weiter sind der Unter-Stoßfängerquerträger 13 und Ober-Stoßfängerquerträger 14 erkennbar, wobei diese entsprechend über den Unter-Längsträger 18 und den Ober-Längsträger 9 gehalten und nach rückwärts abgestützt sind. Der Unter-Längsträger 18 ist relativ weit nach hinten bis vor den Hilfsrahmen-Anbindungspunkt 19 geführt und läuft am dortigen Anbindungspunkt 20 schräg in den Längsträger 5 ein. Der Unter-Längsträger 18 und der Ober-Längsträger 9 liegen dabei etwa in einer Vertikal-Längsebene.

Der Unter-Stoßfängerquerträger 13 ist mit dem Stoßfängerquerträger 3 zudem durch im Abstand versetzte Laschen 21 verbunden.

Der Unter-Stoßfängerquerträger 13 und der Ober-Stoßfängerquerträger 14 aus Fig. 2 bzw. der gesamte Frontschildrahmen 12 aus Fig. 1 sind gegenüber dem Stoßfängerquerträger 3 etwas zurückversetzt angeordnet. Zudem sind zu beiden Seiten des Ober-Stoßfängerquerträgers 14 und mit diesem verbunden jeweils Schweinwerfer-Brillenrahmen 22 angebracht, in denen Scheinwerfer aufgenommen werden können.

Gegenüber der ersichtlich steifen Ausbildung des Stoßfängerquerträgers 3 und der angeschlossenen Längsträger 4, 5 sind der Frontschildrahmen 12 bzw. der Unter-Stoßfängerquerträger 13 und der Ober-Stoßfängerquerträger 14 mit ihren zugeordneten Längsträgern 17, 18, 8, 9 weniger steif und leichter deformierbar ausgebildet.

### BEZUGSZEICHENLISTE

- 1: Tragstruktur
- 2: Vorderwagen
- 3: Stoßfängerquerträger
- 4: Längsträger
- 5: Längsträger
- 6: A-Säule
- 7: A-Säule
- . 8: Ober-Längsträger
- 9: Ober-Längsträger
- 10: Radhaus
- 11: Radhaus
- 12: Frontschildrahmen
- 13: Unter-Stoßfängerquerträger
- 14: Ober-Stoßfängerquerträger
- 15: Rahmenstütze
- 16: Rahmenstütze
- 17: Unter-Längsträger
- 18: Unter-Längsträger
- 19: Hilfsrahmen-Anbindungspunkt
- 20: Anbindungspunkt
- 21: Verbindungslasche
- 22: Scheinwerfer-Brillenrahmen

## Patentansprüche

1. Tragstruktur eines Vorderwagens eines Kraftfahrzeugs,
mit einem Stoßfängerquerträger (3), der jeweils in Seitenbereichen mit den vorderen Enden von Längsträgern (4, 5) verbunden ist, und
mit je einer seitlichen Kotflügelbank als Ober-Längsträger (8, 9), an die jeweils nach unten ein Radhaus (10, 11) anschließt,
**dadurch gekennzeichnet,**
**daß** ein Unter-Stoßfängerquerträger (13) vorgesehen ist, der unterhalb des Stoßfängerquerträgers (3) verläuft,
**daß** der Unter-Stoßfängerquerträger (13) jeweils in einem Seitenbereich mit den vorderen Enden von Unter-Längsträgern (17, 18) verbunden ist, und
**daß** die Unter-Längsträger (17, 18) in einem nach rückwärts versetzten Abstand zum Unter-Stoßfängerquerträger (13) an einem Anbindungspunkt (20) jeweils mit einem benachbarten Längsträger (4, 5) und/oder mit einem Schweller verbunden sind.

2. Tragstruktur nach Anspruch 1, **dadurch gekennzeichnet, daß** der Anbindungspunkt (20) relativ weit nach rückwärts versetzt im Bereich eines Hilfsrahmen-Anbindungspunkts (19) und/oder im Übergangsbereich zu einem Schweller liegt.

3. Tragstruktur nach Anspruch 1 oder Anspruch 2, **dadurch gekennzeichnet, daß** je ein Unter-Längsträger (17, 18) und ein zugeordneter Längsträger (4, 5) in einer Vertikal-Längsebene liegen.

4. Tragstruktur nach einem der Ansprüche 1 bis 3, **dadurch gekennzeichnet, daß** der Stoßfängerquerträger (3) mit dem Unter-Stoßfängerquerträger (13) über Verbindungslaschen (21) verbunden ist.

5. Tragstruktur nach einem der Ansprüche 1 bis 4, **dadurch gekennzeichnet, daß** der Unter-Stoßfängerquerträger (13) gegenüber dem Stoßfängerquerträger (3) zurückversetzt angeordnet ist.

6. Tragstruktur nach einem der Ansprüche 1 bis 5, **dadurch gekennzeichnet, daß** ein Ober-Stoßfängerquerträger (14) vorgesehen ist, der oberhalb des Stoßfängerquerträgers (3) verläuft und der jeweils in einem Seitenbereich mit dem vorderen Ende eines Ober-Längsträgers (8, 9) verbunden ist.

7. Tragstruktur nach Anspruch 6, **dadurch gekennzeichnet, daß** jeweils in einem Seitenbereich des Ober-Stoßfängerquerträgers (14) eine Scheinwerfer-Aufnahme als Scheinwerfer-Brillenrahmen (22) angeschlossen ist.

8. Tragstruktur nach einem der Ansprüche 1 bis 7, **dadurch gekennzeichnet, daß** der Ober-Stoßfängerquerträger (14) und der Unter-Stoßfängerquerträger (13) in einer Vertikal-Querebene liegen.

9. Tragstruktur nach einem der Ansprüche 6 bis 8, **dadurch gekennzeichnet, daß** der Ober-Stoßfängerquerträger (14) und der Unter-Stoßfängerquerträger (13) mit jeweils seitlichen Rahmenstützen (15, 16) einen geschlossenen Frontschildrahmen (12) bilden.

10. Tragstruktur nach einem der Ansprüche 1 bis 9, **dadurch gekennzeichnet, daß** der Unter-Stoßfängerquerträger (13) und/oder der Ober-Stoßfängerquerträger (14) und/oder die Rahmenstützen (15, 16) und/oder die Unter-Längsträger (17, 18) und/oder die Ober-Längsträger (8, 9) weniger stabil und mit weniger Energie deformierbar sind als der Stoßfängerquerträger (3) und die Längsträger (4, 5).

## Claims

1. Supporting structure of a front end of a motor vehicle, having a bumper crossmember (3) which is connected in each case in side regions to the front ends of longitudinal members (4, 5), and having respective lateral wing panels as upper longitudinal members (8, 9) downwardly adjoined in each case by a wheel house (10, 11), **characterized in that** a lower bumper crossmember (13) is provided and runs below the bumper crossmember (3), **in that** the lower bumper crossmember (13) is connected in each case in a side region to the front ends of lower longitudinal members (17, 18), and **in that** the lower longitudinal members (17, 18) are connected at an attachment point (20) in each case, at a distance offset rearwards with respect to the lower bumper crossmember (13), to an adjacent longitudinal member (4, 5) and/or to a sill.

2. Supporting structure according to Claim 1, **characterized in that** the attachment point (20) is situated offset relatively far rearwards in the region of an auxiliary-frame attachment point (19) and/or in the transition region to a sill.

3. Supporting structure according to Claim 1 or Claim 2, **characterized in that** one lower longitudinal member (17, 18) and an associated longitudinal member (4, 5) lie in a vertical longitudinal plane.

4. Supporting structure according to one of Claims 1 to 3, **characterized in that** the bumper crossmember (3) is connected to the lower bumper crossmember (13) via connecting tabs (21).

5. Supporting structure according to one of Claims 1 to 4, **characterized in that** the lower bumper crossmember (13) is arranged offset back from the bumper crossmember (3).

6. Supporting structure according to one of Claims 1 to 5, **characterized in that** an upper bumper crossmember (14) is provided and runs above the bumper crossmember (3) and is connected in each case in a side region to the front end of an upper longitudinal member (8, 9).

7. Supporting structure according to Claim 6, **characterized in that** a headlight holder in the form of a headlight-type spectacle frame (22) is connected in each case in a side region of the upper bumper crossmember (14).

8. Supporting structure according to one of Claims 1 to 7, **characterized in that** the upper bumper crossmember (14) and the lower bumper crossmember (13) are situated in a vertical transverse plane.

9. Supporting structure according to one of Claims 6 to 8, **characterized in that** the upper bumper crossmember (14) and the lower bumper crossmember (13) use respective lateral frame supports (15, 16) to form a closed front shield frame (12).

10. Supporting structure according to one of Claims 1 to 9, **characterized in that** the lower bumper crossmember (13) and/or the upper bumper crossmember (14) and/or the frame supports (15, 16) and/or the lower longitudinal members (17, 18) and/or the upper longitudinal members (8, 9) are less stable and can be deformed with less energy than the bumper crossmember (3) and the longitudinal members (4, 5).

## Revendications

1. Structure porteuse de la partie avant du châssis d'un véhicule automobile, qui comporte une poutrelle transversale (3) de pare-chocs dont les zones latérales sont reliées aux extrémités avant de poutrelles longitudinales (4, 5) respectives et des supports de garde-boue latéraux, lesquels supports présentent la forme de poutrelles longitudinales supérieures (8, 9) en dessous desquelles se raccordent des logements de roue (10, 11) respectifs, **caractérisée en ce qu'**est prévue une poutrelle transversale inférieure (13) de pare-chocs qui s'étend en dessous de la poutrelle transversale (3) de pare-chocs,
**en ce que** les zones latérales de la poutrelle transversale inférieure (13) de pare-chocs sont reliées aux extrémités avant de poutrelles longitudinales inférieures (17, 18) respectives et
**en ce que** les poutrelles longitudinales inférieures (17, 18) sont reliées à chaque fois à une poutrelle longitudinale (4, 5) voisine et/ou à un seuil de porte en un point de liaison (20) situé à une distance décalée vers l'arrière par rapport à la poutrelle transversale inférieure (13) de pare-chocs.

2. Structure porteuse selon la revendication 1, **caractérisée en ce que** le point de liaison (20) est décalé relativement loin vers l'arrière dans la zone d'un point de liaison (19) d'un cadre auxiliaire et/ou dans la zone de transition avec un seuil de porte.

3. Structure porteuse selon la revendication 1 ou la revendication 2, **caractérisée en ce qu'**une poutrelle longitudinale inférieure (17, 18) et une poutrelle longitudinale (4, 5) respectives sont situées dans un même plan longitudinal vertical.

4. Structure porteuse selon l'une des revendications 1 à 3, **caractérisée en ce que** la poutrelle transversale (3) de pare-chocs est reliée à la poutrelle transversale inférieure (13) de pare-chocs par des pattes de liaison (21).

5. Structure porteuse selon l'une des revendications 1 à 4, **caractérisée en ce qu'**une poutrelle transversale inférieure (13) de pare-chocs est disposée en décalage vers l'arrière par rapport à la poutrelle transversale (3) de pare-chocs.

6. Structure porteuse selon l'une des revendications 1 à 5, **caractérisée en ce qu'**une poutrelle transversale supérieure (14) de pare-chocs est prévue, s'étend au-dessus de la poutrelle transversale (3) de pare-chocs et est reliée dans chacune de ses zones latérales à l'extrémité avant d'une poutrelle longitudinale supérieure (8, 9).

7. Structure porteuse selon la revendication 6, **caractérisée en ce qu'**un logement de phare configuré en encadrement (22) d'optique de phare est relié à chaque zone latérale de la poutrelle transversale supérieure (14) de pare-chocs.

8. Structure porteuse selon l'une des revendications 1 à 7, **caractérisée en ce que** la poutrelle transversale supérieure (14) de pare-chocs et la poutrelle transversale inférieure (13) de pare-chocs sont disposées dans un plan transversal vertical.

9. Structure porteuse selon l'une des revendications 6 à 8, **caractérisée en ce que** la poutrelle transversale supérieure (14) de pare-chocs et la poutrelle transversale inférieure (13) de pare-chocs forment avec des appuis latéraux d'encadrement (15, 16) respectifs un encadrement fermé (12) de panneau avant.

10. Structure porteuse selon l'une des revendications 1 à 9, **caractérisée en ce que** la poutrelle transversale inférieure (13) de pare-chocs et/ou la poutrelle transversale supérieure (14) de pare-chocs et/ou les appuis d'encadrement (15, 16) et/ou les poutrelles longitudinales inférieures (17, 18) et/ou les poutrelles longitudinales supérieures (8, 9) sont moins solides et peuvent être déformés avec moins d'énergie que la poutrelle transversale (3) de pare-chocs et les poutrelles longitudinales (4, 5).
